# EUROPEAN PATENT APPLICATION

(11) **EP 4 492 632 A1**
(43) Date of publication of application: **15.01.2025**
(21) Application number: 24187870.1
(22) Date of filing: 10.07.2024
(51) Int. Cl.: H02J 50/20, H04B 3/52

(54) **RADIO FREQUENCY SIGNAL AND POWER THROUGH DIELECTRIC WAVEGUIDE FOR GALVANIC ISOLATION TO HYDROGEN SENSORS**

(30) Priority: 10.07.2023 US 202318349821
(71) Applicant: Kidde Technologies, Inc., Wilson, NC 27896 (US)
(72) Inventor: MANTESE, Joseph V., Ellington, 06029 (US); CHANGMIN, Cao, Cork, T12 CX82 (IE)
(74) Representative: Dehns

(57) **Abstract**

Apparatus and associated methods relate to galvanically isolating one or more sensors from a controller. Power and control signals are provided to an isolation system via RF electromagnetic waves transmitted from the controller to the isolation system via a dielectric waveguide. The received RF electromagnetic waves are converted into an RF electrical signal and then the RF electrical signal is separated into power and control signal components. The RF power signal component is rectified and regulated so as to provide power to the isolation system. A sensor interrogator is electrically connected to one or more sensors so as to receive sense signals therefrom. The sensor interrogator generates a data signal indicative of one or more physical metrics of a potentially hazardous environment in which the one or more sensors are situated. The data signal is converted to RF electromagnetic waves, which are transmitted, via the dielectric waveguide, to the controller.

## Description

### BACKGROUND

Hydrogen (H₂) fuel has widely used for aviation industry through fuel cell or direct burn because of low emission. Safety concern of hydrogen leakage become an important factor for the hydrogen powered aircraft. Hydrogen has small molecular weight and low viscosity, which make it is very easy to leak from tank and pipe. The leakage rate is ten times higher than nitrogen. Multi-hydrogen sensor technologies are applicable for hydrogen leak detection, including catalytic hydrogen, electrochemical, semi-conductive metal-oxide, thermal conductivity, optical, palladium (alloy) film-based, and combined technology-based sensors. All the sensors require a power supply system, current signal and power is provided to wired hydrogen sensors through direct connection. However, due to low minimum ignition energy, which is about ten times lower than gasoline, a weak spark in the range of 10 mJ, would ignite leaked hydrogen in a wide flammability range of 4-75 vol%.

### SUMMARY

Some embodiments relate to galvanically isolating one or more hydrogen sensors from a sensor controller. The system includes a Radio Frequency (RF) signal transponder configured to receive RF electromagnetic waves, via a dielectric waveguide, from the sensor controller. The RF signal transponder is further configured to convert the received RF electromagnetic waves to an RF electrical signal. The system includes a signal separator electrically connected to the RF signal transponder. The signal separator is configured to separate the RF electrical signals into an RF power signal component and an RF control signal component. The system includes a power converter electrically connected to the signal separator so as to receive the RF power signal component therefrom. The power converter has a power rectifier and a power regulator. The power rectifier is configured to rectify the RF power signal component, thereby generating a rectified power signal. The power regulator is electrically connected to the power rectifier so as to receive the rectified power signal therefrom. The power regulator is configured to regulate a regulated power signal, thereby generating DC power for the system. The system also includes a sensor interrogator electrically connected to the signal separator so as to receive the RF control signal component therefrom. The signal interrogator is configured to electrically connect to the one or more hydrogen sensors so as to receive one or more sense signals therefrom. The one or more sense signals are indicative of one or more volume percentages of hydrogen proximate the one or more hydrogen sensors. The sensor interrogator is further configured to generate a data signal indicative of the one or more volume percentages of hydrogen proximate the one or more hydrogen sensors. The RF signal transponder is electrically connected to the sensor interrogator so as to receive the data signal therefrom. The RF signal transponder is further configured to transmit RF electromagnetic waves, via the dielectric waveguide, to the sensor controller. The transmitted RF electromagnetic waves are indicative of the one or more volume percentages of hydrogen proximate the one or more hydrogen sensors as indicated by the data signal.

Some embodiments relate to a system for galvanically isolating one or more sensors from a sensor controller. The system includes a Radio Frequency (RF) signal transponder configured to receive RF electromagnetic waves, via a dielectric waveguide, from the sensor controller. The RF signal transponder is further configured to convert the received RF electromagnetic waves to an RF electrical signal. The system includes a signal separator electrically connected to the RF signal transponder. The signal separator is configured to separate the RF electrical signals into an RF power signal component and an RF control signal component. The system includes a power converter electrically connected to the signal separator so as to receive the RF power signal component therefrom. The power converter includes a power rectifier configured to rectify the RF power signal component, thereby generating a rectified power signal. The power converter includes a power regulator electrically connected to the power rectifier so as to receive the rectified power signal therefrom. The power regulator is configured to regulate a regulated power signal, thereby generating DC power for the system. The power converter also includes a sensor interrogator electrically connected to the signal separator so as to receive the RF control signal component therefrom. The signal interrogator is configured to electrically connect to the one or more sensors so as to receive one or more sense signals therefrom. The one or more sense signals are indicative of one or more physical metrics of a potentially hazardous environment. The sensor interrogator is further configured to generate a data signal indicative of the one or more physical metrics of the potentially hazardous environment. The RF signal transponder is electrically connected to the sensor interrogator so as to receive the data signal therefrom. The RF signal transponder is further configured to transmit RF electromagnetic waves, via the dielectric waveguide, to the sensor controller. The transmitted RF electromagnetic waves are indicative of the one or more physical metrics of the potentially hazardous environment as indicated by the data signal.

Some embodiments relate to a method for galvanically isolating one or more sensors from a sensor controller. In the method, an RF electromagnetic transmitted from a sensor controller via a dielectric waveguide is received. The received RF electromagnetic waves are converted to an RF electrical signal. The RF electrical signals are separated into an RF power signal component and an RF control signal component. The RF power signal component is rectifies, thereby generating a rectified power signal. The rectified power signal is regulated, thereby generating a regulated power signal, thereby generating DC power for the system. The one or more sense signals indicative of one or more volume percentages of hydrogen proximate one or more hydrogen sensors are received. A data signal indicative of the one or more volume percentages of hydrogen proximate one or more hydrogen sensors is generated RF electromagnetic waves are transmitted, via the dielectric waveguide, to the sensor controller. The transmitted RF electromagnetic waves are indicative of the one or more volume percentages of hydrogen proximate one or more hydrogen sensors as indicated by the data signal.

### BRIEF DESCRIPTION OF THE DRAWINGS

FIG. 1 is a perspective view of a hydrogen-powered aircraft, which is equipped with galvanically isolated hydrogen sensors.
FIG. 2 is a block diagram of a system for galvanically isolating hydrogen sensors.
FIGS. 3A and 3B are top and bottom views, respectively, of an electronic board assembly that interfaces with a dielectric waveguide so as to galvanically isolate sensors located in a hazardous environment.

### DETAILED DESCRIPTION

Apparatus and associated methods relate to galvanically isolating one or more sensors from a sensor controller. Power and control signals are provided to an isolation system via RF electromagnetic waves transmitted from the sensor controller to the isolation system via a dielectric waveguide. The received RF electromagnetic waves are converted into an RF electrical signal and then the RF electrical signal is separated into power and control signal components. The RF power signal component is rectified and regulated so as to provide power to the isolation system. A sensor interrogator is electrically connected to one or more sensors so as to receive sense signals therefrom. The sensor interrogator generates a data signal indicative of one or more physical metrics of a potentially hazardous environment in which the one or more sensors are situated. The data signal is converted to RF electromagnetic waves, which are transmitted, via the dielectric waveguide, to the sensor controller.

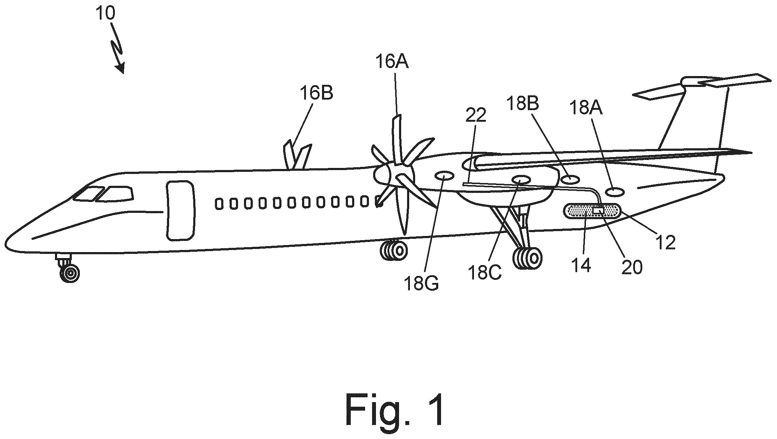

FIG. 1 is a perspective view of a hydrogen-powered aircraft, which is equipped with galvanically isolated hydrogen sensors. In FIG. 1, hydrogen-powered aircraft 10 has cryogenic fuel tank 12 that is filled with liquid hydrogen 14. Although hydrogen-powered aircraft 10 is depicted as having turboprop engines 16A and 16B, hydrogen can be used as fuel for a variety of aircraft engines. For example, hydrogen can be used as fuel for traditional aircraft engines, such as, for example, turbofan engines and piston engines. Hydrogen can also be used to power a fuel cell so as to generate electricity, which powers an electric propulsor. To detect leakage of hydrogen fuel, hydrogen sensors 18A-18G are located near fuel tank 12 and turboprop engines 16A and 16B as well as near fuel pump 20 and fuel line 22. Hydrogen sensors 18A-18G are galvanically isolated from electrical power system 24 of turboprop aircraft 10 by sensor-interface 26. Turbofan aircraft 10 generates electrical power by power units 24A and 24B, which are mechanically driven by turboprop engines 16A and 16B, respectively. Typically, aircraft, such as aircraft 10 generates electrical power using other means as well, such as by an auxiliary power unit. Sensor interface 26 is electrically connected to hydrogen sensors 18A-18, but galvanically isolated from sensor controller 28, which controls sense operation of hydrogen sensors 18A-18G.

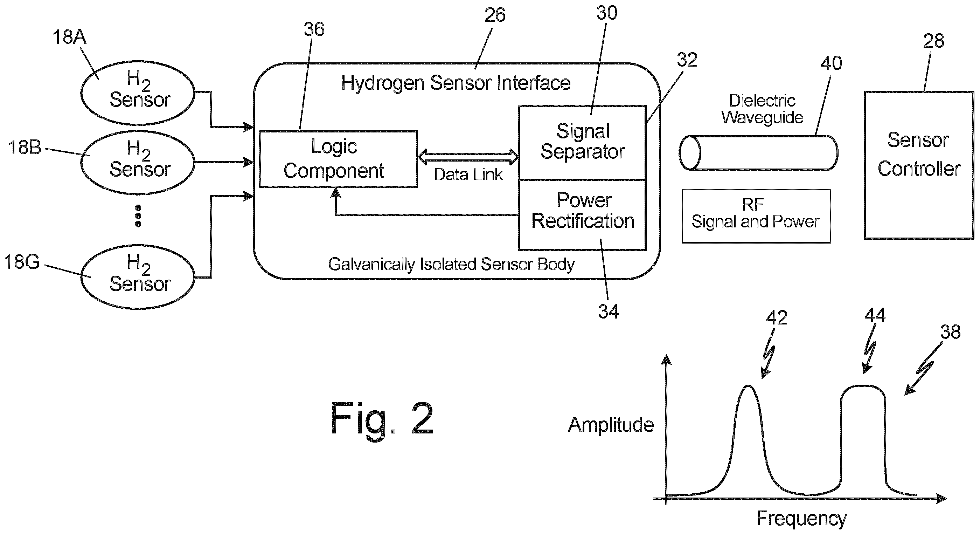

FIG. 2 is a block diagram of a system for galvanically isolating hydrogen sensors. In FIG. 2, sensor interface 26 galvanically isolates and facilitates communication between hydrogen sensors 18A-18G and sensor controller 28. Sensor interface 26 includes Radio Frequency (RF) signal transponder 30, signal separator 32, power converter 34 and sensor interrogator 36. Sensor controller 28 generates RF electromagnetic waves 38, which are typically in the GHz frequency range, and directs RF electromagnetic waves 38 into dielectric waveguide 40. In some embodiments, RF electromagnetic waves 38 include two components, RF power signal component 42 in power frequency band F_{POWER} and RF control signal component 44 in data frequency band F_{DATA}. Energy provided by RF power signal component 42 in power frequency band F_{POWER} is used by sensor interface 26 as a source of operating power for sensor interface 26 as well as for hydrogen sensors 18A-18G. RF control signal component 44 in data frequency band F_{DATA} is interpreted by sensor interface 26 as control signals for sensor interface 26 and/or hydrogen sensors 18A-18G.

In other embodiments, RF signal component 44 is combined with RF power component 42. In such embodiments, the power frequency band F_{POWER} can be modulated so as to include signal information. The signal information is interpreted by the sensor interface 26 before the power frequency band F_{POWER} is converted to operating power for use by sensor interface 26 as well as for hydrogen sensors 18A-18G. When separate frequency bands are used for power and signal components, F_{POWER} and F_{DATA}, the frequency bands are separated in the frequency domain by a fraction of an average (e.g., a geometric or arithmetic average) of the frequency bands are used for power and signal components, F_{POWER} and F_{DATA}. For example, the fraction of separation can be 10, 15, 20, 25, 33, or 50 percent of the geometric or arithmetic average of the frequency bands F_{POWER} and F_{DATA}.

RF signal transponder 30 receives RF electromagnetic waves 38, via dielectric waveguide 40, from sensor controller 28. RF signal transponder 30 converts the received RF electromagnetic waves 38 to RF electrical signal 42. Signal separator 32 is electrically connected to RF signal transponder 30. Signal separator 32 separates the RF electrical signals into RF power signal component 42 and an RF control signal component 44. Such separation can be performed, for example, by band-pass filters that select each of power frequency band F_{POWER} and data frequency band F_{DATA}. Power converter 34 is electrically connected to signal separator 32 so as to receive RF power signal component 44 therefrom. Power converter 34 includes power rectifier 46 and power regulator 48. Power rectifier 46 rectifies RF power signal component 42, thereby generating rectified power signal 50. Power regulator 48 is electrically connected to power rectifier 46 so as to receive rectified power signal 50 therefrom. Power regulator 48 generates regulated DC power 52 from rectified power signal 50, thereby generating DC operating power for sensor interface 26 and for hydrogen sensors 18A-18G.

Sensor interrogator 36 is electrically connected to signal separator 32 so as to receive RF control signal component 44 therefrom. Signal interrogator 36 is electrically connected to hydrogen sensors 18A-18G so as to receive one or more sense signals 54A-54G, respectively, therefrom. Sense signals 54A-54G are indicative of one or more volume percentages of hydrogen proximate hydrogen sensors 18A-18G. Sensor interrogator 36 generates data signal 56 indicative the volume percentages of hydrogen proximate the hydrogen sensors 18A-18G. RF signal transponder30 is electrically connected to sensor interrogator 36 so as to receive the data signal therefrom. RF signal transponder 36 further configured to transmit RF electromagnetic waves 56, via dielectric waveguide 40, to sensor controller 28, the transmitted RF electromagnetic waves indicative of the one or more volume percentages of hydrogen proximate the one or more hydrogen sensors as indicated by the data signal.

Although the system depicted in FIG. 2 was directed to detecting hydrogen, various other applications can avail themselves from such galvanic isolation. For example, various other systems are designed to operate in a hazardous environment, in which a spark can cause fire or an explosion. In such systems, providing power and signal communication between a remote controller and a sensing system can protect such systems from such dangers.

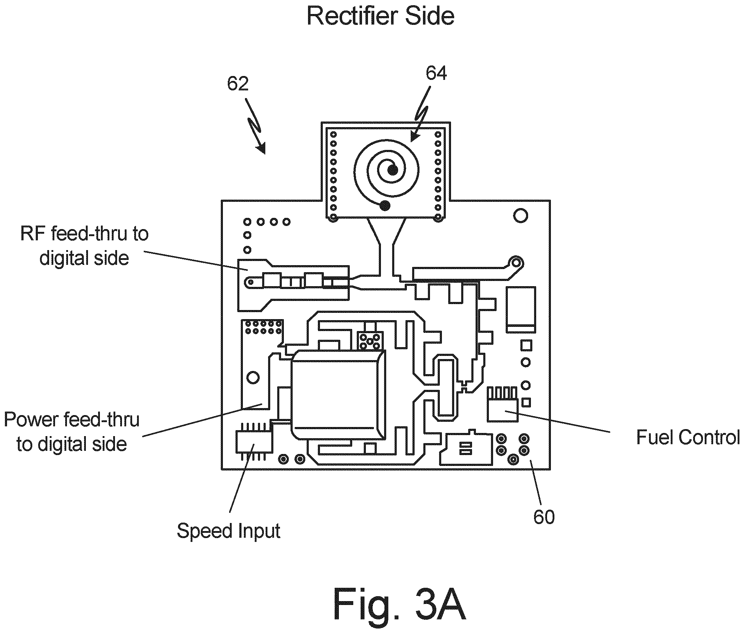

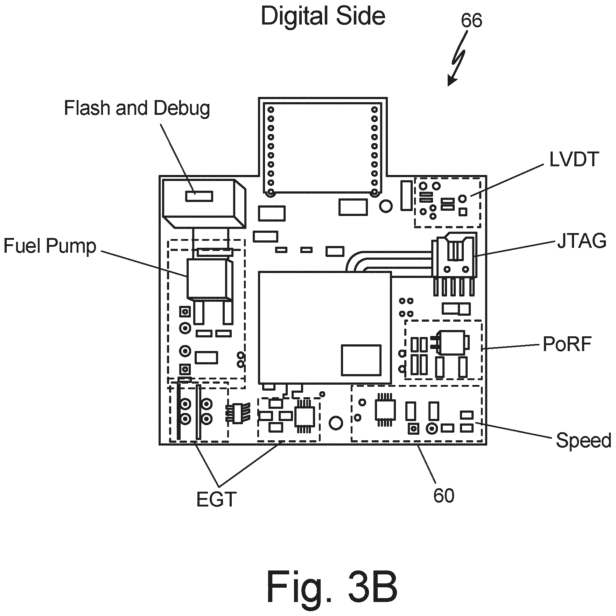

FIGS. 3A and 3B are top and bottom views, respectively, of an electronic board assembly that interfaces with a dielectric waveguide so as to galvanically isolate sensors located in a hazardous environment. In FIG. 3A, interface side 62 of electronic board assembly 60 is depicted. Interface side 62 includes antenna 64 which is configured to interface with dielectric waveguide 40 (depicted in FIG. 2). Antenna 64 can transmit signals generated by and receive power and signals directed to electronic board assembly 60. Interface side 62 provides separation of signal and power of RF electromagnetic waves received by antenna 62. Interface side 62 also rectifies and regulates the power signal received, thereby generating operating power for digital side 66, depicted in FIG. 3B. Digital side 66 receives both operating power and signals received from interface side 62. Digital side 66 then performs operations in response to the signals received. Digital side 66 can query sensors, for example, and/or control fuel flow in a hazardous environment.

### Discussion of Possible Embodiments

The following are non-exclusive descriptions of possible embodiments of the present invention.

Some embodiments relate to galvanically isolating one or more hydrogen sensors from a sensor controller. The system includes a Radio Frequency (RF) signal transponder configured to receive RF electromagnetic waves, via a dielectric waveguide, from the sensor controller. The RF signal transponder is further configured to convert the received RF electromagnetic waves to an RF electrical signal. The system includes a signal separator electrically connected to the RF signal transponder. The signal separator is configured to separate the RF electrical signals into an RF power signal component and an RF control signal component. The system includes a power converter electrically connected to the signal separator so as to receive the RF power signal component therefrom. The power converter has a power rectifier and a power regulator. The power rectifier is configured to rectify the RF power signal component, thereby generating a rectified power signal. The power regulator is electrically connected to the power rectifier so as to receive the rectified power signal therefrom. The power regulator is configured to regulate a regulated power signal, thereby generating DC power for the system. The system also includes a sensor interrogator electrically connected to the signal separator so as to receive the RF control signal component therefrom. The signal interrogator is configured to electrically connect to the one or more hydrogen sensors so as to receive one or more sense signals therefrom. The one or more sense signals are indicative of one or more volume percentages of hydrogen proximate the one or more hydrogen sensors. The sensor interrogator is further configured to generate a data signal indicative of the one or more volume percentages of hydrogen proximate the one or more hydrogen sensors. The RF signal transponder is electrically connected to the sensor interrogator so as to receive the data signal therefrom. The RF signal transponder is further configured to transmit RF electromagnetic waves, via the dielectric waveguide, to the sensor controller. The transmitted RF electromagnetic waves are indicative of the one or more volume percentages of hydrogen proximate the one or more hydrogen sensors as indicated by the data signal.

The system of the preceding paragraph can optionally include, additionally and/or alternatively, any one or more of the following features, configurations and/or additional components:
A further embodiment of the foregoing system, wherein the signal separator can separate the RF electrical signals into an RF power signal component and an RF control signal component by separating a power frequency band from a control signal frequency band.

A further embodiment of any of the foregoing systems, wherein each of the power and control signal frequency bands can be in the GHz region of a frequency spectrum.

A further embodiment of any of the foregoing systems, wherein a frequency difference between centers of the power and control signal frequency bands can be greater than ten percent of an arithmetic average or a geometric average of the power and control signal frequency bands.

A further embodiment of any of the foregoing systems, wherein the system can be configured for operation on hydrogen powered aircraft.

A further embodiment of any of the foregoing systems, wherein the system can be further configured to provide the DC power to the one or more hydrogen sensors.

A further embodiment of any of the foregoing systems can further include the one or more hydrogen sensors.

A further embodiment of any of the foregoing systems can further include the dielectric waveguide.

A further embodiment of any of the foregoing systems can further include the sensor controller.

A further embodiment of any of the foregoing systems, wherein the DC power can have a voltage less than 5 volts.

Some embodiments relate to a system for galvanically isolating one or more sensors from a sensor controller. The system includes a Radio Frequency (RF) signal transponder configured to receive RF electromagnetic waves, via a dielectric waveguide, from the sensor controller. The RF signal transponder is further configured to convert the received RF electromagnetic waves to an RF electrical signal. The system includes a signal separator electrically connected to the RF signal transponder. The signal separator is configured to separate the RF electrical signals into an RF power signal component and an RF control signal component. The system includes a power converter electrically connected to the signal separator so as to receive the RF power signal component therefrom. The power converter includes a power rectifier configured to rectify the RF power signal component, thereby generating a rectified power signal. The power converter includes a power regulator electrically connected to the power rectifier so as to receive the rectified power signal therefrom. The power regulator is configured to regulate a regulated power signal, thereby generating DC power for the system. The power converter also includes a sensor interrogator electrically connected to the signal separator so as to receive the RF control signal component therefrom. The signal interrogator is configured to electrically connect to the one or more sensors so as to receive one or more sense signals therefrom. The one or more sense signals are indicative of one or more physical metrics of a potentially hazardous environment. The sensor interrogator is further configured to generate a data signal indicative of the one or more physical metrics of the potentially hazardous environment. The RF signal transponder is electrically connected to the sensor interrogator so as to receive the data signal therefrom. The RF signal transponder is further configured to transmit RF electromagnetic waves, via the dielectric waveguide, to the sensor controller. The transmitted RF electromagnetic waves are indicative of the one or more physical metrics of the potentially hazardous environment as indicated by the data signal.

The method of the preceding paragraph can optionally include, additionally and/or alternatively, any one or more of the following features, configurations and/or additional components:

A further embodiment of the foregoing system, wherein the signal separator can separate the RF electrical signals into an RF power signal component and an RF control signal component by separating a power frequency band from a control signal frequency band.

A further embodiment of any of the foregoing systems, wherein each of the power and control signal frequency bands can be in the GHz region of a frequency spectrum.

A further embodiment of any of the foregoing systems, wherein a frequency difference between centers of the power and control signal frequency bands can be greater than ten percent of an arithmetic average or a geometric average of the power and control signal frequency bands.

A further embodiment of any of the foregoing systems, wherein the system can be configured for operation on hydrogen powered aircraft.

A further embodiment of any of the foregoing systems, wherein the system can be further configured to provide the DC power to the one or more hydrogen sensors.

A further embodiment of any of the foregoing systems can further include the one or more hydrogen sensors.

A further embodiment of any of the foregoing systems can further include the dielectric waveguide.

A further embodiment of any of the foregoing systems can further include the sensor controller.

A further embodiment of any of the foregoing systems, wherein the DC power can have a voltage less than 5 volts.

Some embodiments relate to a method for galvanically isolating one or more sensors from a sensor controller. In the method, an RF electromagnetic transmitted from a sensor controller via a dielectric waveguide is received. The received RF electromagnetic waves are converted to an RF electrical signal. The RF electrical signals are separated into an RF power signal component and an RF control signal component. The RF power signal component is rectifies, thereby generating a rectified power signal. The rectified power signal is regulated, thereby generating a regulated power signal, thereby generating DC power for the system. The one or more sense signals indicative of one or more volume percentages of hydrogen proximate one or more hydrogen sensors are received. A data signal indicative of the one or more volume percentages of hydrogen proximate one or more hydrogen sensors is generated RF electromagnetic waves are transmitted, via the dielectric waveguide, to the sensor controller. The transmitted RF electromagnetic waves are indicative of the one or more volume percentages of hydrogen proximate one or more hydrogen sensors as indicated by the data signal.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system for galvanically isolating one or more hydrogen (H₂) sensors from a sensor controller, the system comprising:
a Radio Frequency (RF) signal transponder configured to receive RF electromagnetic waves, via a dielectric waveguide, from the sensor controller, the RF signal transponder further configured to convert the received RF electromagnetic waves to an RF electrical signal;
a signal separator electrically connected to the RF signal transponder, the signal separator configured to separate the RF electrical signals into an RF power signal component and an RF control signal component;
a power converter electrically connected to the signal separator so as to receive the RF power signal component therefrom, the power converter including:
a power rectifier configured to rectify the RF power signal component, thereby generating a rectified power signal;
a power regulator electrically connected to the power rectifier so as to receive the rectified power signal therefrom, the power regulator configured to regulate a regulated power signal, thereby generating DC power for the system; and
a sensor interrogator electrically connected to the signal separator so as to receive the RF control signal component therefrom, the signal interrogator configured to electrically connect to the one or more H₂ sensors so as to receive one or more sense signals therefrom, the one or more sense signals indicative of one or more volume percentages of H₂ proximate the one or more H₂ sensors, the sensor interrogator further configured to generate a data signal indicative of the one or more volume percentages of H₂ proximate the one or more H₂ sensors,
wherein the RF signal transponder is electrically connected to the sensor interrogator so as to receive the data signal therefrom, the RF signal transponder further configured to transmit RF electromagnetic waves, via the dielectric waveguide, to the sensor controller, the transmitted RF electromagnetic waves indicative of the one or more volume percentages of H₂ proximate the one or more H₂ sensors as indicated by the data signal.

2. The system of claim 1, wherein the signal separator separates the RF electrical signals into an RF power signal component and an RF control signal component by separating a power frequency band from a control signal frequency band.

3. The system of claim 2, wherein each of the power and control signal frequency bands are in the GHz region of a frequency spectrum.

4. The system of claim 2 or 3, wherein a frequency difference between centers of the power and control signal frequency bands is greater than ten percent of an arithmetic average or a geometric average of the power and control signal frequency bands.

5. The system of any preceding claim, wherein the system is configured for operation on hydrogen powered aircraft.

6. The system of any preceding claim, wherein the system is configured to provide the DC power to the one or more hydrogen sensors.

7. The system of any preceding claim, further comprising:
the one or more hydrogen sensors.

8. The system of any preceding claim, further comprising:
the dielectric waveguide.

9. The system of any preceding claim 8, further comprising:
the sensor controller.

10. The system of any preceding claim, wherein the DC power has a voltage less than 5 volts.

11. A system for galvanically isolating one or more sensors from a sensor controller, the system comprising:
a Radio Frequency (RF) signal transponder configured to receive RF electromagnetic waves, via a dielectric waveguide, from the sensor controller, the RF signal transponder further configured to convert the received RF electromagnetic waves to an RF electrical signal;
a signal separator electrically connected to the RF signal transponder, the signal separator configured to separate the RF electrical signals into an RF power signal component and an RF control signal component;
a power converter electrically connected to the signal separator so as to receive the RF power signal component therefrom, the power converter including:
a power rectifier configured to rectify the RF power signal component, thereby generating a rectified power signal;
a power regulator electrically connected to the power rectifier so as to receive the rectified power signal therefrom, the power regulator configured to regulate a regulated power signal, thereby generating DC power for the system; and
a sensor interrogator electrically connected to the signal separator so as to receive the RF control signal component therefrom, the signal interrogator configured to electrically connect to the one or more sensors so as to receive one or more sense signals therefrom, the one or more sense signals indicative of one or more physical metrics of a potentially hazardous environment, the sensor interrogator further configured to generate a data signal indicative of the one or more physical metrics of the potentially hazardous environment,
wherein the RF signal transponder is electrically connected to the sensor interrogator so as to receive the data signal therefrom, the RF signal transponder further configured to transmit RF electromagnetic waves, via the dielectric waveguide, to the sensor controller, the transmitted RF electromagnetic waves indicative of the one or more physical metrics of the potentially hazardous environment as indicated by the data signal;
optionally wherein the system of comprises the one or more sensors.

12. The system of claim 11, wherein the RF signal transponder is further configured to transmit the signal separator configured to separate the RF electrical signals into an RF power signal component and an RF control signal component by separating a power frequency band from a control signal frequency band; optionally wherein each of the power and control signal frequency bands are in the GHz region of a frequency spectrum; and/or optionally wherein a frequency difference between centers of the power and control signal frequency bands is greater than ten percent of an arithmetic average or a geometric average of the power and control signal frequency bands.

13. The system of claim 11 or 12, wherein the system is further configured to provide the DC power to the one or more sensors and/or wherein the DC power has a voltage less than 5 volts.

14. The system of claim 11, 12 or 13, further comprising:
the dielectric waveguide; and/or the sensor controller.

15. A method for galvanically isolating one or more sensors from a sensor controller, the method comprising:
receiving, via a dielectric waveguide, an RF electromagnetic wave from a sensor controller;
converting the received RF electromagnetic waves to an RF electrical signal;
separating the RF electrical signals into an RF power signal component and an RF control signal component;
rectifying the RF power signal component, thereby generating a rectified power signal;
regulating the rectified power signal, thereby generating a regulated power signal, thereby generating DC power for the system;
receiving one or more sense signals indicative of one or more volume percentages of H₂ proximate one or more H₂ sensors;
generating a data signal indicative of the one or more volume percentages of H₂ proximate one or more H₂ sensors; and
transmitting RF electromagnetic waves, via the dielectric waveguide, to the sensor controller, the transmitted RF electromagnetic waves indicative of the one or more volume percentages of H₂ proximate one or more H₂ sensors as indicated by the data signal.
